# EUROPEAN PATENT APPLICATION

(11) **EP 2 068 167 A2**
(43) Date of publication of application: **10.06.2009**
(21) Application number: 08170828.1
(22) Date of filing: 05.12.2008
(51) Int. Cl.: G01S 1/00

(54) **Notebook computers with integrated satellite navigation systems**

(30) Priority: 02.12.2008 US 326334; 06.12.2007 US 5603
(71) Applicant: O2 Micro, Inc., Santa Clara, CA 95054 (US)
(72) Inventor: Du, Sterling, Palo Alto, CA 94306 (US); Huang, Yishao-Max, Santa Clara, CA 95054 (US); Wang, James, Santa Clara, CA 95054 (US); Yu, Xiaoguang, 430074, Wuhan Hubei (CN)
(74) Representative: Lippert, Stachow & Partner

(57) **Abstract**

A notebook computer can receive a satellite navigation system (SNS) signal from satellites and realize a navigation function. The notebook computer includes a navigation device, a peripheral component interconnect (PCI) bus and a CPU. The navigation device is used for receiving the SNS signal and generating an intermediate frequency (IF) signal by down-converting a frequency of the SNS signal. The PCI bus coupled to the navigation device is used for transmitting the IF signal. The CPU is coupled to the navigation device via the PCI bus and is for reading and processing the IF signal to output a position, velocity and time (PVT) information signal for the notebook computer to realize the navigation function.

## Description

### BACKGROUND ART

The use of a satellite navigation system (SNS) such as the Global Positioning System (GPS) satellite constellation for obtaining a terrestrial position fix (latitude and longitude) is widespread and well known. GPS has become a widely-used aid to navigation, and a useful tool for map-making, land surveying, commerce, and scientific uses. GPS also provides a precise time reference. However, a traditional GPS apparatus is expensive and its functionality is limited by the processing ability of its central processing unit (CPU).

### SUMMARY

According to one embodiment of the invention, a notebook computer can receive a satellite navigation system (SNS) signal from satellites and realize a navigation function. The notebook computer includes a navigation device, a peripheral component interconnect (PCI) bus and a CPU. The navigation device is used for receiving the SNS signal and generating an intermediate frequency (IF) signal by down-converting a frequency of the SNS signal. The PCI bus coupled to the navigation device is used for transmitting the IF signal. The CPU is coupled to the navigation device via the PCI bus and is used for reading and processing the IF signal to output a position, velocity and time (PVT) information signal for the notebook computer to realize the navigation function.

### BRIEF DESCRIPTION OF THE DRAWINGS

Features and advantages of embodiments of the invention will become apparent as the following detailed description proceeds, and upon reference to the drawings, where like numerals depict like elements, and in which:

FIG. 1 is a block diagram showing a GPS device which can be integrated in notebook computer, in accordance with one embodiment of the present invention.

FIG. 2 is a block diagram showing a GPS device which can be integrated in notebook computer, in accordance with another embodiment of the present invention.

FIG. 3 is a block diagram showing software, driver and hardware elements of a notebook computer integrated with a GPS device, in accordance with one embodiment of the present invention.

FIG. 4 is a block diagram showing a notebook computer integrated with a GPS device, in accordance with one embodiment of the present invention.

FIG. 5 is a block diagram showing a notebook computer integrated with a GPS device, in accordance with another embodiment of the present invention.

FIG. 6 is a block diagram showing a notebook computer integrated with a GPS device, in accordance with another embodiment of the present invention.

FIG. 7 is a block diagram showing a notebook computer integrated with a GPS device, in accordance with another embodiment of the present invention.

FIG. 8 is a flowchart showing a method for realizing a GPS function of a notebook computer, in accordance with one embodiment of the present invention.

FIG. 9 is a flowchart showing a method for realizing a GPS function of a notebook computer, in accordance with another embodiment of the present invention.

### DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims.

Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.

Some portions of the detailed descriptions which follow are presented in terms of procedures, logic blocks, processing and other symbolic representations of operations on data bits within a computer memory. These descriptions and representations are the means used by those skilled in the data processing arts to most effectively convey the substance of their work to others skilled in the art. In the present application, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present application, discussions utilizing the terms such as "receiving," "generating," "displaying," "responding," "initializing" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments described herein may be discussed in the general context of computer-executable instructions residing on some form of computer-usable medium, such as program modules, executed by one or more computers or other devices. Generally, program modules include routines, programs, objects, components, data structures, etc., that perform particular tasks or implement particular abstract data types. The functionality of the program modules may be combined or distributed as desired in various embodiments.

By way of example, and not limitation, computer-usable media may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, random access memory (RAM), read only memory (ROM), electrically erasable programmable ROM (EEPROM), flash memory or other memory technology, compact disk ROM (CD-ROM), digital versatile disks (DVDs) or other optical storage, magnetic cassettes, magnetic tape, magnetic disk storage or other magnetic storage devices, or any other medium that can be used to store the desired information.

According to an embodiment of the present invention, a notebook computer with an integrated satellite navigation system (SNS) device is provided to realize a navigation function for the notebook computer. Realizing the navigation function means providing position, velocity and time (PVT) information to the notebook computer to make it convenient for a notebook computer user to obtain a terrestrial position and time information. Compared with a GPS device in the prior art, the notebook computer with integrated SNS device according to the embodiment of the present invention has a higher processing capability central processing unit (CPU) for generating the PVT information, a bigger screen for displaying the position and time information, and a larger memory space for storing information. In addition, navigation application software running in the notebook computer is easier to upgrade.

Embodiments according to the invention are discussed in the context of a GPS system; however, the invention is not so limited. In general, the invention is well-suited for use with other types of satellite navigation systems.

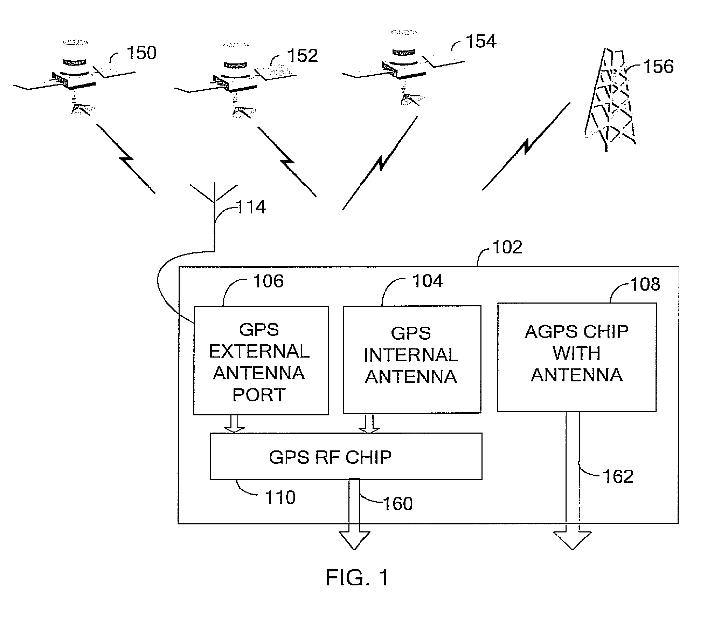

Referring to FIG. 1, a GPS device/navigation device 102 according to one embodiment of the present invention is illustrated. The GPS device 102 can be integrated into a notebook computer. The GPS device 102 includes a GPS internal antenna 104, a GPS external antenna port 106 coupled to an external antenna 114, an assisted GPS (AGPS) chip 108 and a GPS radio frequency (GPS RF) chip 110. The GPS internal antenna 104 and the GPS external antenna port 106 are employed for receiving GPS signals from GPS satellites, e.g., GPS satellites 150, 152 and 154. In one embodiment, the GPS internal antenna 104 and the GPS external antenna port 106 both have a relatively high receiving sensitivity and a relatively fast response speed. In another embodiment, the GPS device 102 may only include either the GPS internal antenna 104 or the GPS external antenna port 106 to receive the GPS signals. The GPS RF chip 110 is coupled to the GPS internal antenna 104 and the GPS external antenna port 106 for reading and processing GPS signals received by the GPS internal antenna 104 and/or the external antenna 114. In one embodiment, the GPS RF chip 110 amplifies and down-converts the frequency of the GPS signals to generate an intermediate frequency (IF) signal 160.

The AGPS chip 108 includes an antenna module and can be used for receiving an AGPS signal from an AGPS signal provider, such as a GSM/CDMA (Global System for Mobile Communications/Code Division Multiple Access) station 156, so as to enhance the performance of the GPS device 102. For example, the GPS device 102 with the AGPS chip 108 can provide reliable position information in poor signal conditions, e.g., in places surrounded by tall buildings or indoors.

The IF signal 160 which is output by the GPS RF chip 110, and a digital AGPS signal 162 which is processed and output by the AGPS chip 108, can be transmitted to a bottom driven program running in a CPU of the notebook computer to calculate PVT information signal for the notebook computer, in one embodiment. In communications and electronic engineering, an intermediate frequency (IF) is a frequency to which a carrier frequency is shifted as an intermediate step in transmission or reception. The most commonly used intermediate frequencies are 10-70 MHz in the satellite and radar world. However, the intermediate frequency can range from 10-100 MHz.

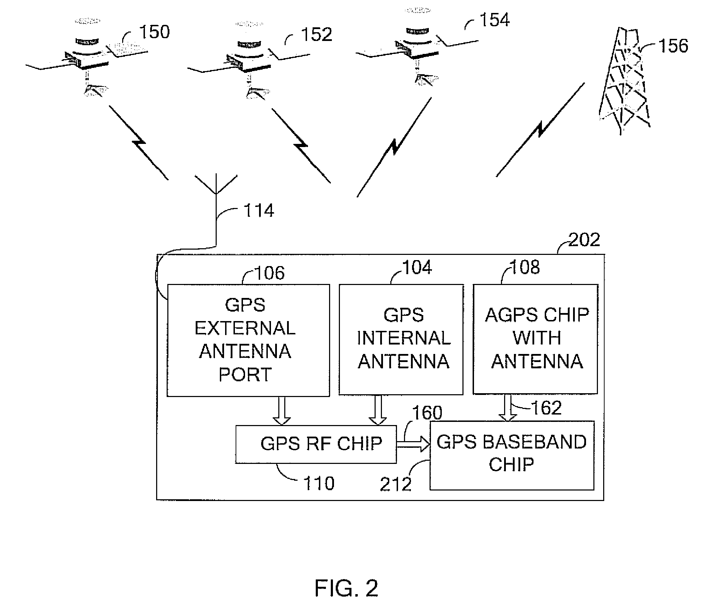

Referring to FIG. 2, a GPS device 202 according to one embodiment of the present invention is illustrated. Elements of the GPS device 202 similar to the elements of the GPS device 102 are designated using the same reference number and will not be described hereinafter in detail. The GPS device 202 includes a GPS internal antenna 104, a GPS external antenna port 106 coupled to an external antenna 114, an assisted GPS chip 108, a GPS RF chip 110, and a GPS baseband chip 212. Instead of transmitting an IF signal and a digital AGPS signal into the above mentioned bottom driven program, the GPS baseband chip 212 is coupled to the GPS RF chip 110 and the AGPS chip 108, and receives the IF signal 160 and the digital AGPS signal 162 so as to calculate the PVT information. The bottom driven program of the notebook computer can access the GPS baseband chip 212 for providing the PVT information.

In an alternate embodiment, the GPS devices 102 and 202 can operate without the AGPS chip 108. In other words, the GPS devices 102 and 202 can operate normally with or without the AGPS chip 108. However, if the AGPS chip 108 is employed in the GPS device 102 or 202, the bottom driven program of the notebook computer or the GPS baseband chip 212 should also support the assisted GPS function, in one embodiment.

In one embodiment, the GPS baseband chip 212 can calculate the PVT information signal directly. In an alternate embodiment, the GPS baseband chip 212 and the bottom driven program cooperate to provide the PVT information. More specifically, the GPS baseband chip 212 can process the IF signal 160 and the AGPS digital signal 162 and transmit intermediary information to the upper level application software. The upper level application software then processes the intermediary information to provide the PVT information, in one embodiment.

Thus, regardless of whether the PVT information signal is generated by the bottom driven program running in the CPU of the notebook computer in FIG. 1 or by the GPS baseband chip 212 in FIG. 2, an upper level navigation application software running in the CPU of the notebook computer receives the PVT information signal and provides detailed position information to an end user by a graphical user interface, in one embodiment.

In one embodiment, the navigation application software provides optional navigate routes to the end user when a target was inputted.

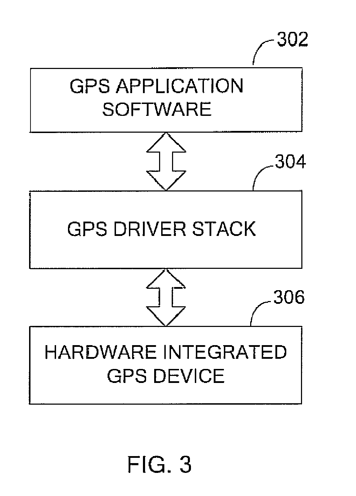

Referring to FIG. 3, software, driver and hardware elements of a notebook computer according to one embodiment of the present invention are illustrated. In a notebook computer system, the hardware integrated GPS device 306 can be the above-mentioned GPS device 102 or GPS device 202 shown in FIG. 1 or FIG. 2. A GPS driver stack 304 that includes a bottom driven program can access the hardware integrated GPS device 306. The GPS driver stack 304 functions as an interface between the hardware integrated GPS device 306 and a navigation application software 302 (e.g., the above-mentioned upper level navigation application software). In other words, the GPS driver stack 304 can provide a platform for the navigation application software 302.

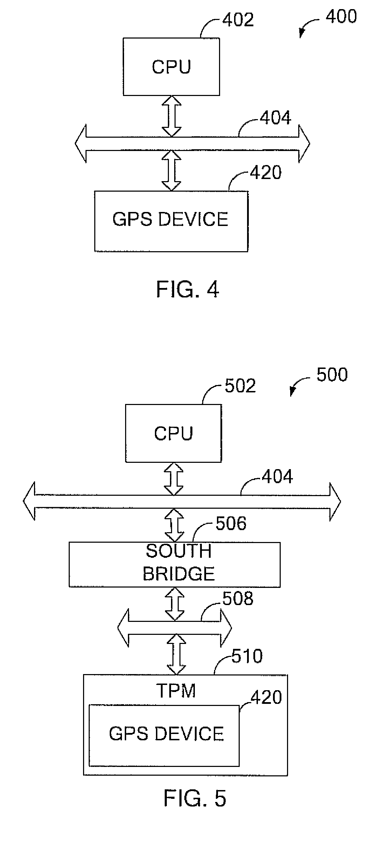

Referring to FIG. 4, an exemplary notebook computer 400 which integrates a GPS device according to one embodiment of the present invention is illustrated. Generally, a notebook computer is a small personal computer designed for mobile use; it may include but is not limited to a CPU, a peripheral component interconnection (PCI) bus integrated in a motherboard, a power supply (a rechargeable battery) and a display screen that is attached by a hinge to a base that contains a keyboard and a pointing device (a touchpad). The notebook computer 400 in FIG. 4 includes a CPU 402, a PCI bus 404, and a GPS device 420.

The GPS device 420, which can be the GPS device 102 or the GPS device 202 shown in FIG. 1 or FIG. 2, is integrated into the notebook computer 400 and is coupled to the PCI bus 404. The PCI bus 404 is used for transmitting signals between the notebook computer 400 and the GPS device 420, and can be another type of peripheral component interconnection buses, such as a PCI-X bus, a PCI-Express bus and so on. In one embodiment, if the peripheral component interconnect bus 404 is a PCI-Express bus, the GPS device 420 can be coupled to a Root Complex (RC) of the notebook computer 400, or can be coupled to a switch coupled to the RC of the notebook computer 400.

In one embodiment, in order for the GPS device 420, e.g., the GPS device 102 as discussed in relation to FIG. 1, to realize the navigation function, the CPU 402 reads and processes the IF signal and the AGPS digital signal, e.g., the IF signal 160 and the AGPS digital signal 162 as described in relation to FIG. 1, from the GPS device 420 through an interface of the PCI bus 404. The bottom driven program running in CPU 402 of the notebook computer 400, e.g., the bottom driven program in the GPS driver stack 304 shown in FIG. 3, calculates the PVT information signal to realize the navigation function of the notebook computer 400. In one embodiment, the detailed position information is displayed on a screen of the notebook computer 400 by a graphical user interface of the navigation application software. The high processing capability of the notebook computer CPU 402 can realize a rapid and reliable navigation function.

In another embodiment, in order for the GPS device 420, e.g., the GPS device 202 shown in FIG. 2, to realize a navigation function, the CPU 402 configures a control register (not shown) of the GPS baseband chip, e.g., the GPS baseband chip 212 shown in FIG. 2, through an interface of the PCI bus 404. In one embodiment, the PCI bus 404 is a PCI bus and the CPU 402 configures the control register of the GPS baseband chip through a PCI interface. When the GPS baseband chip receives the IF signal and the AGPS digital signal, e.g., the IF signal 160 and the AGPS digital signal 162, and calculates the PVT information, it sends out interrupt signals (not shown) to inform the CPU 402 via the PCI bus 404. The CPU 402 can respond to the interrupt signals and read the PVT information signal from the baseband chip 212 via the PCI bus 404. Then, the bottom driven program running in CPU 402 of the notebook computer 400, e.g., the bottom driven program in the GPS driver stack 304 shown in FIG. 3, accesses the chip 212 and provides the PVT information to the navigation application software running in the notebook computer 400, e.g., the GPS application software 302 shown in FIG. 3. The navigation application can function to display the detailed position information by the graphical user interface on the screen of the notebook computer 400.

Since the navigation application software is easy to install on a notebook computer, it is convenient to download or upgrade a new version of the navigation application software by the notebook computer end user.

Referring to FIG. 5, an exemplary notebook computer 500 which integrates a GPS device according to one embodiment of the present invention is illustrated. The notebook computer 500 includes a CPU 402, a PCI bus 404, a south bridge 506, a Low Pin Count (LPC) bus 508, and a Trusted Platform Module (TPM) chip 510.

The LPC bus 508 is used to connect low-bandwidth devices to the CPU, such as the TPM chip 510. In one embodiment, the physical wires of the LPC bus 508 connect to a south bridge chip 506 on a motherboard (the Southbridge chip and the motherboard are not shown in the figures) of the computer 500. The TPM chip 510 is used for implementing the TPM specification, which details a secure cryptoprocessor that can store cryptographic keys to protect information.

In the computer 500, a GPS device 420 is integrated into the TPM chip 510 as part of the TPM chip for realizing the navigation function of the notebook computer 500. The GPS device 420 can cooperate with the CPU 502 to calculate the PVT information signal and display the position and navigation information on the screen of the computer 500.

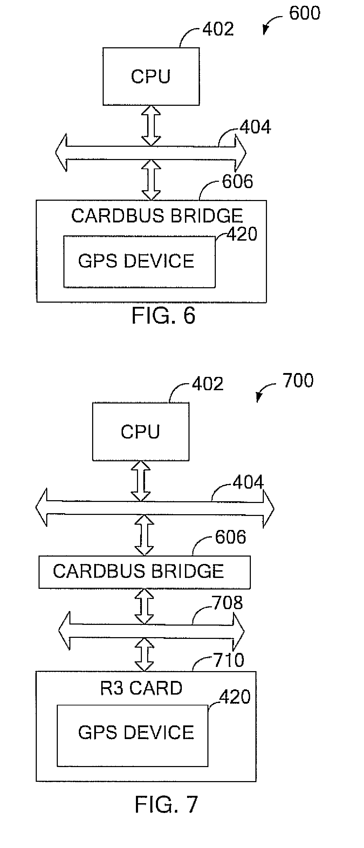

Referring to FIG. 6, an exemplary computer 600 which integrates a GPS device according to one embodiment of the present invention is illustrated. The computer 600 includes a CPU 402, a PCI bus 404, and a Cardbus bridge 606. In the computer 600, a GPS device 420 is integrated into a chip of the Cardbus bridge 606, which is coupled to the CPU 402 through the PCI bus 404. The CardBus bridge 606 can be another type of bus bridge, such as a Personal Computer Memory Card International Association (PCMCIA), Secure Digital (SD), MultiMedia Card (MMC), Institute of Electrical and Electronics Engineers (IEEE) 1394 bridge, etc.

Referring to FIG. 7, an exemplary notebook computer 700 which integrates a GPS device according to one embodiment of the present invention is illustrated. The notebook computer 700 includes a CPU 402, a PCI bus 404, a Cardbus bridge 606, and a Cardbus interface 708. In the notebook computer 700, a GPS device 420, is integrated into a Personal Computer (PC) card, such as a R3 card 710. The R3 card 710 can be plugged into the notebook computer 700 and cooperate with the notebook computer 700 through the Cardbus interface 708. The notebook computer 700 can access the memory of the R3 card 710 through the CardBus interface 708, and receive the IF signal or the PVT information. The PC card can be another type of card which matches to the type of bus bridge.

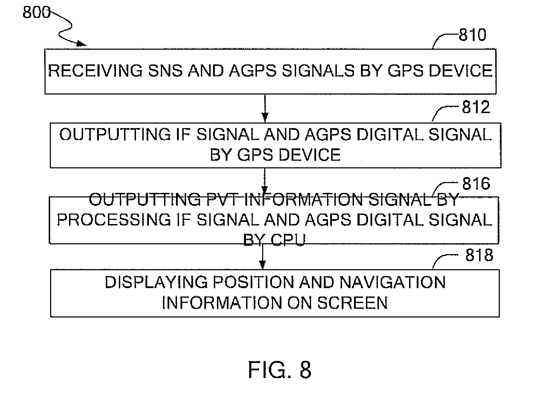

Referring to FIG. 8, a method 800 for realizing a navigation function of a notebook computer in accordance with one embodiment of the present invention is illustrated. FIG. 8 is described in combination with FIG. 1. In one embodiment, a GPS device 102, including an GPS internal antenna 104 and/or a GPS external antenna port 106 coupled to an external antenna 114, an AGPS chip 108 with an AGPS antenna, and a GPS RF chip 110, is integrated in the notebook computer and cooperates with a CPU of the notebook computer.

At 810, a GPS signal and an AGPS signal are received by the GPS internal antenna 104 or/and the external antenna 114, and by the AGPS antenna of the GPS device 101, respectively.

At 812, the GPS RF chip 110 outputs an IF signal 160 and the AGPS chip 108 outputs an AGPS digital signal 162 by processing the received GPS signal and the AGPS signal, respectively.

At 814, the CPU in the notebook computer generates a PVT information signal by receiving and processing the IF signal and the AGPS digital signal. The intermediate frequency (IF) signal 160 which is processed and output by the GPS RF chip 110, and the digital AGPS signal 162 which is processed and output by the AGPS chip 108, can be transmitted to upper level GPS application software of the notebook computer to calculate the PVT information signal for the notebook computer, in one embodiment.

At 816, the notebook computer displays the position and navigation information according to the PVT information signal on a screen of the notebook computer by navigation application software running on the CPU of the notebook computer.

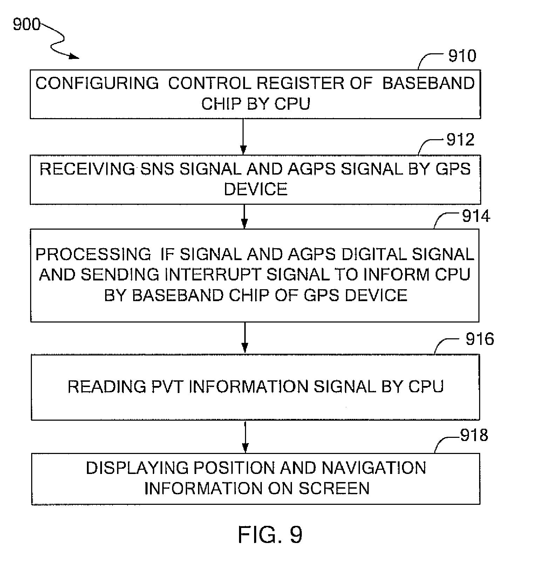

Referring to FIG. 9, a method 900 for realizing a navigation function of a notebook computer in accordance with another embodiment of the present invention is illustrated. FIG. 9 is described in combination with FIG. 2. A GPS device, including an GPS internal antenna 104 and/or a GPS external antenna port 106 coupled to an external antenna 114, an AGPS chip 108 with an AGPS antenna, a GPS RF chip 110, and a baseband chip 212, is integrated in the notebook computer and cooperates with a CPU via a PCI bus of the notebook computer.

At 910, the CPU of the notebook computer configures a control register of the baseband chip 212 for initiating the navigation function. The CPU configures the control register of the GPS baseband chip 212 through an interface of the PCI bus. In one embodiment, the CPU configures the control register of the GPS baseband chip through a PCI interface.

At 912, a GPS signal and an AGPS signal are received by the GPS internal antenna 104 or/and the external antenna 114, and by the AGPS antenna 108 of the GPS device, respectively.

At 914, the baseband chip 212 of the GPS device receives and processes the IF signal and the AGPS digital signal and generates a PVT information signal for the notebook computer. When the GPS baseband chip 212 receives the IF signal 160 and the digital signal 162, and calculates the PVT information signal, it sends out an interrupt signal to inform the CPU.

At 916, the CPU responds to the interrupt signal and reads the PVT information signal from the baseband chip 212.

At 918, the notebook computer displays the position information according to the PVT information signal on a screen by navigation application software running on the CPU of the notebook computer.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

## Claims

1. A notebook computer for receiving a satellite navigation system (SNS) signal from a plurality of satellites and realizing a navigation function, comprising:
a navigation device for receiving said SNS signal and generating an intermediate frequency (IF) signal by down-converting a frequency of said SNS signal;
a peripheral component interconnect (PCI) bus coupled to said navigation device for transmitting said IF signal; and
a central processing unit (CPU) coupled to said navigation device via said PCI bus and is for reading and processing said IF signal to output a position, velocity and time (PVT) information signal for said notebook computer to realize said navigation function.

2. The notebook computer of claim 1, wherein said notebook computer further comprises a screen coupled to said CPU for displaying said PVT information signal.

3. The notebook computer of claim 1, wherein said navigation device comprises:
an antenna for receiving said SNS signal from said satellites; and
a radio frequency (RF) chip for down-converting said frequency of said SNS signal for generating said IF signal to said CPU.

4. The notebook computer of claim 3, wherein said antenna is an internal antenna.

5. The notebook computer of claim 3, wherein said antenna comprises:
an external antenna; and
an external antenna port associated with said external antenna for receiving said SNS signal.

6. The notebook computer of claim 3, wherein said navigation device further comprises an assisted Global Positioning System (AGPS) chip comprising an antenna module for receiving an AGPS signal from an AGPS signal provider and for outputting an AGPS digital signal to said CPU for generating said PVT information signal.

7. The notebook computer of claim 6, wherein said AGPS signal provider is selected from the group consisting of: a GSM station and a CDMA station.

8. The notebook computer of claim 3, further comprising:
a south bridge coupled to said CPU via said PCI bus;
a low pin count (LPC) bus associated with said south bridge for transmitting said IF signal from said navigation device to said CPU; and
a trusted platform module (TPM) chip, wherein said navigation device is integrated as part of said TPM chip.

9. The notebook computer of claim 8, wherein said device further comprises an AGPS chip comprising an antenna module for receiving an AGPS signal from an AGPS signal provider and for outputting an AGPS digital signal to said CPU for generating said PVT information signal.

10. The notebook computer of claim 3, further comprising a bus bridge coupled to said CPU via said PCI bus, wherein said navigation device is integrated into said bus bridge.

11. The notebook computer of claim 10, wherein said navigation device further comprises an AGPS chip comprising an antenna module for receiving an AGPS signal from an AGPS signal provider and for outputting an AGPS digital signal to said CPU for generating said PVT information signal.

12. The notebook computer of claim 10, wherein said bus bridge is a CardBus bridge.

13. The notebook computer of claim 3, further comprising:
a bus bridge coupled to said CPU;
a bus interface associated with said bus bridge for transmitting said IF signal from said device to said CPU; and
a PC card which is capable of being inserted into said bus interface, wherein said device is integrated into said PC card.

14. The notebook computer of claim 13, wherein said navigation device further comprises an AGPS chip comprising an antenna module for receiving an AGPS signal from an AGPS signal provider and for outputting an AGPS digital signal to said CPU for generating said PVT information signal.

15. The notebook computer of claim 1, wherein said peripheral component interconnect is selected from the group consisting of: a PCI-X bus and a PCI-Express bus.

16. A notebook computer for receiving a SNS signal from a plurality of satellites and realizing a navigation function, comprising:
a navigation device for receiving and processing said SNS signal for generating a PVT information signal;
a peripheral component interconnect (PCI) bus coupled to said navigation device for transmitting said PVT information signal;
a screen coupled to said PCI bus; and
a CPU coupled to said navigation device via said PCI bus and for reading said PVT information signal to realize said navigation function and for generating an instance of detailed position information on said screen.

17. The notebook computer of claim 16, wherein said navigation device comprises:
an antenna for receiving said SNS signal from said satellites; and
a radio frequency (RF) chip for down-converting a frequency of said SNS signal for generating said IF signal to said CPU; and
a baseband chip for receiving said IF signal, calculating said PVT information signal and outputting an interrupt signal to said CPU so as to inform said CPU to read said PVT information signal.

18. The notebook computer of claim 16, further comprising:
a south bridge coupled to said CPU;
a low pin count (LPC) bus associated said south bridge for transmitting said PVT information signal from said navigation device to said CPU; and
a trusted platform module (TPM) chip, wherein said navigation device is integrated in as part of said TPM chip.

19. The notebook computer of claim 16, further comprising a bus bridge couple to said CPU via said PCI bus, wherein said navigation device is integrated into said bus bridge.

20. The notebook computer of claim 16, further comprising:
a bus bridge coupled to said CPU;
a bus interface associated with said bus bridge for transmitting said PVT information signal from said GPS device to said CPU; and
a PC card which is capable of being inserted into said bus interface, wherein said device is integrated into said PC card.

21. A method for realizing a navigation function of a notebook computer, comprising:
receiving a satellite navigation system (SNS) signal from a plurality of satellites by an antenna of a navigation device integrated in said notebook computer;
generating an IF signal according to said SNS signal by an RF chip of said navigation device;
generating a PVT information signal by receiving and processing said IF signal by a CPU of said notebook computer; and
displaying said PVT information signal on a screen of said notebook computer for realizing said navigation function.

22. The method of claim 21, further comprising:
receiving an AGPS signal from an AGPS provider by an AGPS chip comprising an antenna module;
generating an AGPS digital signal according to said AGPS signal by said RF chip of said navigation device; and
generating said PVT information signal by receiving and processing said AGPS digital signal by said CPU.

23. A method for realizing a navigation function of a notebook computer, comprising:
initializing a baseband chip of a navigation device which is intergraded in said notebook computer;
receiving a GPS signal from a plurality of satellites by an antenna of a navigation device integrated in said notebook computer;
generating an IF signal according to said SNS signal by an RF chip of said navigation device;
generating a PVT information signal by receiving and processing said IF signal and outputting an interrupt signal to inform said CPU by said baseband chip;
responding to said interrupt signal and reading said PVT information signal by said CPU; and
displaying said PVT information signal on a screen of said notebook computer for realizing said navigation function.

24. The method of claim 23, further comprising:
receiving an AGPS signal from an AGPS provider by an AGPS chip comprising an antenna module;
generating an AGPS digital signal according to said AGPS signal by said RF chip of said navigation device; and
generating said PVT information signal by receiving and processing said AGPS digital signal by said baseband chip.
